# EUROPÄISCHE PATENTSCHRIFT

(11) **EP 4 035 810 B1**
(45) Veröffentlichungstag und Bekanntmachung des Hinweises auf die Patenterteilung: **05.07.2023**
(21) Anmeldenummer: 21194723.9
(22) Anmeldetag: 03.09.2021
(51) Int. Cl.: B23B 31/12, B23B 31/10

(54) **VORRICHTUNG ZUM SPIELFREIEN VORSPANNEN VON SPANNBACKEN EINER DREHMASCHINE**
DEVICE FOR THE PLAY-FREE PRESTRESSING OF CLAMPING JAWS OF A LATHE
DISPOSITIF DE PRÉ-SERRAGE SANS JEU DES MÂCHOIRES DE SERRAGE D'UNE MACHINE TOURNANTE

(30) Priorität: 02.02.2021 AT 600362021
(43) Veröffentlichungstag der Anmeldung: 03.08.2022
(73) Patentinhaber: Engertsberger, Klaus, 4400 Steyr (AT)
(72) Erfinder: Engertsberger, Klaus, 4400 Steyr (AT)
(74) Vertreter: Hübscher & Partner Patentanwälte GmbH

(56) Entgegenhaltungen:
- DE-T2- 69 006 207
- FR-A- 907 771
- US-A- 3 945 654

## Beschreibung

Die Erfindung bezieht sich auf eine Vorrichtung zum spielfreien Vorspannen von Spannbacken einer Drehmaschine mit wenigstens drei verbindbaren Spannschenkeln, wobei zum umfänglichen Einschließen eines Ausdrehbereichs jeweils zwei Spannschenkel über einen gemeinsamen Backeneingriffsstift miteinander verbunden sind und wobei zum Ändern des Durchmessers des eingeschlossenen Ausdrehbereichs die Backeneingriffsstifte entlang eines in Spannschenkellängsrichtung verlaufenden Verstellabschnitts der Spannschenkel festlegbar sind.

Vor allem empfindliche von einer Drehmaschine zu bearbeitende Werkstücke werden zum spanenden Bearbeitenden in weiche Spannbacken einer Drehmaschine eingespannt. Für einen sicheren Halt werden die Spannbacken durch vorangegangenes Bearbeiten, beispielsweise Ausdrehen, an das Werkstück angepasst. Zum exakten Bearbeiten der Spannbacken muss das Spiel der Spannbacken beseitigt werden. Dies kann beispielsweise durch eine aus der FR907771A vorbekannte Vorrichtung zum Vorspannen von Spannbacken erfolgen. Die dort offenbarte Vorrichtung weist drei miteinander verbundene Spannschenkel auf. Ein Spannschenkel ist dabei über zwei Backeneingriffsstifte mit den jeweils anderen beiden Spannschenkeln verbunden, sodass sich ein geschlossener Rahmen ergibt. Der Rahmen spannt einen Ausdrehbereich auf, in den zum Bearbeiten der Spannbacken ein spanabhebendes Werkzeug eingeführt werden kann. Zur Änderung des Durchmessers des Ausdrehbereichs können die Backeneingriffsstifte entlang eines Schlitzes verschoben werden, an der gewünschten Stelle mit Klemmmuttern fixiert werden und dadurch an die Stellung der Spannbacken angepasst werden. Damit die Backeneingriffsstifte zum Vorspannen der Spannbacken in die Backeneingriffsstiftaufnahmen der Spannbacken eingreifen können, muss der gewünschte Abstand der Backeneingriffsstiftaufnahmen exakt auf die Backeneingriffsstifte der Spannschenkel übertragen werden, da andernfalls die ungleichmäßige Ausrichtung der Spannschenkel zueinander zu einer Beschädigung der Vorrichtung, sowie zu einem unexakten Bearbeiten der Spannbacken führen würde. Dieses Prozedere muss für jeden Spannschenkel und exakt gleich ausgeführt werden, was einerseits einen erheblichen Zeitaufwand bedeutet und andererseits die Gefahr eines Fehlers sowohl beim Messen als auch beim Fixieren der Backeneingriffsstifte erhöht.

Der Erfindung liegt somit die Aufgabe zugrunde, eine Vorrichtung zum spielfreien Vorspannen von Spannbacken einer Drehmaschine der eingangs geschilderten Art vorzuschlagen, die eine schnelle und dennoch fehlerunanfällige Anpassung auf unterschiedliche Spannbackenstellungen erlaubt.

Die Erfindung löst die gestellte Aufgabe dadurch, dass der Verstellabschnitt der Spannschenkel von wenigstens abschnittsweise entlang der Spannschenkel angeordneten Löchern ausgebildet ist. Aufgrund der erfindungsgemäßen Merkmale ergibt sich eine Vielzahl an Kombinationen bereits vorgefertigter Abstände zwischen zwei Backeneingriffsstiften eines Spannschenkels, sodass weder an jedem Spannschenkel exakt Maß genommen werden muss, noch die Backeneingriffsstifte feinmotorisch aufwändig an der passenden Stelle durch eine Klemmmutter fixiert werden müssen.

Soll eine Vorrichtung zum Vorspannen von Spannbacken eingesetzt werden, so wird zunächst das Maß der Beabstandung zweier Backeneingriffsstiftaufnahmen zweier unterschiedlicher Spannbacken genommen. Anschließend werden vom Verstellabschnitt jedes Spannschenkels jene zwei Löcher mit einem zum zuvor bestimmten Maß nächstgelegenen Abstand ausgewählt. Die Backeneingriffsstifte werden zum Verbinden von jeweils zwei Spannschenkeln durch jeweils ein Loch eines Spannschenkels geführt. Jedem Spannschenkel sind somit zwei Backeneingriffsstifte, deren Beabstandung im Wesentlichen dem zuvor bestimmten Maß der Beabstandung zweier Backeneingriffsstiftaufnahmen entspricht, zugeordnet, wobei jeder Spannschenkel über den ersten Backeneingriffsstift mit einem zweiten Spannschenkel und über den zweiten Backeneingriffsstift mit einem dritten Spannschenkel lösbar verbunden ist. Die Vorrichtung weist somit insbesondere drei Backeneingriffsstifte auf, die jeweils zwei Spannschenkel miteinander verbinden. Auf diese Weise wird von den miteinander verbundenen Spannschenkeln ein Rahmen gebildet, der einen Ausdrehbereich aufspannt. Die zusammengesteckte Vorrichtung kann anschließend über die Spannbackeneingriffsstifte in Spannbackeneingriffsstiftaufnahmen der Spannbacken gesteckt werden, bevor die Spannbacken der Drehmaschine radial nach innen gegen die Vorrichtung angedrückt und dadurch spielfrei angelegt werden. In den aufgespannten Ausdrehbereich kann anschließend ein spanabhebendes Werkzeug eingeführt werden.

Die Löcher und Backeneingriffsstifte müssen nicht zwangsweise rund ausgestaltet sein, sondern müssen lediglich einen Formschluss zwischen Loch und Backeneingriffsstift erlauben. Die Löcher können demnach zur formschlüssigen Aufnahme der Backeneingriffsstifte ausgebildet sein. Insbesondere können die Löcher zur passgenauen Aufnahme der Backeneingriffsstifte ausgebildet sein. Die Löcher sind wenigstens abschnittsweise entlang der Spannschenkel, insbesondere entlang der Spannschenkellängsrichtung der Spannschenkel, also in Richtung deren längster Ausdehnung angeordnet. Um ein Lösen der Spannschenkel in Axialrichtung der Backeneingriffsstifte zu verhindern, können diese auf der den Spannbacken abgewandten Seite Anschläge aufweisen. Diese Anschläge können von aufgeschraubten Muttern gebildet sein.

Um die Fehleranfälligkeit eines falschen Zusammenbauens zu reduzieren, wird vorgeschlagen, dass die Spannschenkel Gleichteile sind. Gleichteile bedeutet in diesem Zusammenhang, dass die Form und Verstellabschnitte, also die Anzahl und Positionen der Löcher, der Spannschenkel gleich sind. Dadurch genügt es, dass nur bei einem Spannschenkel zwei Löcher mit einem zum von den Spannbacken abgenommen Maß nächstgelegenen Abstand bestimmt werden müssen. Auf den anderen Spannschenkeln können aufgrund der Ausbildung der Spannschenkel als Gleichteile, die gleichen Löcher ausgewählt werden.

Eine besonders große Flexibilität hinsichtlich der Durchmesserveränderung des von den Spannschenkeln eingeschlossenen Ausdrehbereichs ergibt sich, wenn die Spannschenkel gekrümmt ausgebildet sind. Insbesondere können die Spannschenkel unterschiedliche Krümmungsradien aufweisen, wodurch sich eine besonders feine Abstufung unterschiedlicher Beabstandungen zwischen zwei Löchern des Verstellabschnitts ergibt.

Damit Spannbacken gängiger Drehmaschinen vorgespannt werden können, empfiehlt es sich in einer besonders vielseitig einsetzbaren Form des Erfindungsgegenstandes, dass je Spannschenkel 10 bis 50, insbesondere 20 bis 40, Löcher vorgesehen sind.

Um trotz einer feinen Abstufung des Verstellabschnitts eine ausreichend hohe Stabilität der Vorrichtung zu gewährleisten, können je Spannschenkel zwei Verstellabschnitte vorgesehen sein, welche durch einen durchgängig ausgebildeten Stabilisierungsabschnitt voneinander beabstandet sind. Der Stabilisierungsabschnitt weist demnach keine Löcher für die Backeneingriffsstifte auf. Vorzugsweise ist je Spannschenkel ein Backeneingriffsstift im ersten Verstellabschnitt und der andere Backeneingriffsstift im zweiten Verstellabschnitt vorgesehen. Die Beabstandung zwischen benachbarten Löchern unterschiedlicher Verstellabschnitte können unterschiedlich ausgebildet sein, sodass ein Verstellabschnitt zur Feinabstufung der Beabstandung zwischen zwei Backeneingriffsstiften eingesetzt werden kann.

Damit eine korrekte Ausrichtung der Spannschenkel erleichtert und die zuvor auf einem Spannschenkel bestimmten Positionen der Löcher schnell auf die anderen Spannschenkel übertragen werden können, wird vorgeschlagen, dass die zwei Verstellabschnitte je Spannschenkel eine unterschiedliche Anzahl an Löcher aufweisen. Der erste Verstellabschnitt kann beispielsweise 3 bis 15 Löcher aufweisen. Der zweite Verstellabschnitt kann 10 bis 35 Löcher aufweisen. Die Verstellabschnitte können jeweils an einem Ende des Spannschenkels ansetzen.

Eine noch feinere Abstufung des Verstellabschnitts, ohne dabei den Zusammenbau der Spannschenkel zu erschweren und die Fehleranfälligkeit zu erhöhen, ergibt sich, wenn an einem Endabschnitt der Spannschenkel ein Schenkelfortsatz vorgesehen ist, der einen von Löchern ausgebildeten Verstellabschnitt ausbildet, wobei der Schenkelfortsatz auf der dem Ausdrehbereich abgewandten Bogenseite der Spannschenkel vom restlichen Spannschenkel abragt. Durch den Schenkelfortsatz kann eine Feinabstimmung des Abstands zwischen zwei Löchern vorgenommen werden. Bei entsprechender Anordnung der Löcher auf diesem Schenkelfortsatz besteht die Möglichkeit einer feineren Abstufung der Abstände zwischen den Löchern der beiden Verstellabschnitte. Dies insbesondere, wenn die Abstände benachbarter Löcher unterschiedlicher Verstellabschnitte unterschiedlich gewählt sind. Vorzugsweise können die Abstände der Löcher des Schenkelfortsatzes kleiner als die Abstände der anderen Verstellabschnitte sein.

Um die Biegespannung in den Spannschenkeln beim Vorspannen der Klemmbacken gering zu halten, wird vorgeschlagen, dass wenigstens zwei Backeneingriffsstiften wenigstens eine Distanzscheibe zugeordnet ist, deren Dicke der Dicke der Spannschenkel entspricht. Die Distanzscheiben können je nach Position zwischen zwei über einen gemeinsamen Backeingriffsstift miteinander verbundenen Spannschenkel angeordnet sein, oder zwischen einem Spannschenkel und einer Spannbacke. Auf diese Weise können die Spannschenkel parallel zueinander verlaufen und kann die Vorrichtung plan an den Spannbacken anliegen.

Die Löcher der Verstellabschnitte können codiert, beispielsweise zahlencodiert oder buchstabencodiert sein. Ein erster Verstellabschnitt eines Spannschenkels kann beispielsweise eine andere Art von Codierung aufweisen als ein zweiter Verstellabschnitt des gleichen Spannschenkels. Auf diese Weise ist eine Übertragung der ausgewählten Positionen der Löcher auf andere Spannschenkel besonders einfach möglich.

In der Zeichnung ist der Erfindungsgegenstand beispielsweise dargestellt. Es zeigen
- Fig. 1: eine Draufsicht einer auf Spannbacken einer Drehmaschine angeordneten erfindungsgemäßen Vorrichtung,
- Fig. 2: eine Seitenansicht der Fig. 1,
- Fig. 3: eine perspektivische Darstellung der erfindungsgemäßen Vorrichtung in vergrößertem Maßstab in einer ersten Ausdrehstellung und
- Fig. 4: eine Draufsicht der erfindungsgemäßen Vorrichtung in einer zweiten Ausdrehstellung.

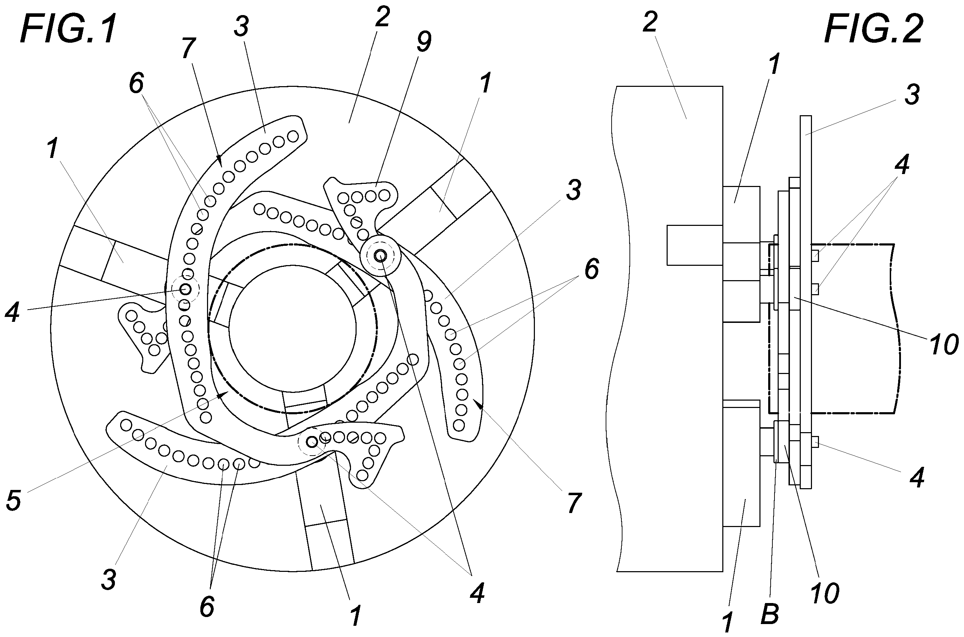

Eine erfindungsgemäße Vorrichtung zum spielfreien Vorspannen von Spannbacken 1 einer Drehmaschine 2, weist, wie beispielsweise den Figs. 1 und 2 zu entnehmen ist, drei Spannschenkel 3 auf, welche über drei Backeneingriffsstifte 4 zur Ausbildung eines geschlossenen Rahmens, welcher einen Ausdrehbereich 5 aufspannt, miteinander verbunden sind. Dabei sind jeweils zwei Spannschenkel 3 über einen gemeinsamen Backeneingriffsstift 4 miteinander verbunden. Die Vorrichtung kann über die Backeneingriffsstifte 4 in nicht ersichtliche Backeneingriffsstiftaufnahmen der Spannbacken 1 eingesetzt werden, wonach die Spannbacken 1 der Drehmaschine 2 radial nach innen gegen die Vorrichtung angedrückt und dadurch spielfrei angelegt werden können. Erfindungsgemäß ist zum Ändern, also zum Vergrößern oder Verkleinern des Durchmessers des Ausdrehbereichs 5 ein von Löchern 6 gebildeter Verstellabschnitt 7 vorgesehen. Nach Abmessen der Beabstandung zweier Backeneingriffsstiftaufnahmen zweier unterschiedlicher Spannbacken 1 können je Verstellabschnitt 7 eines Spannschenkels 3 jene zwei Löcher 6 mit einem zur zuvor bestimmten Beabstandung nächstgelegenen Abstand ausgewählt werden, wonach in die ausgewählten Löcher 6 Backeneingriffsstifte 4 zum Verbinden der drei Spannschenkel 3 eingesetzt werden. Soll der Durchmesser des Ausdrehbereichs 5 vergrößert werden, können die Backeneingriffsstifte 4 entlang des Ausdrehbereichs stufenweise verstellt werden, in dem sie in andere Löcher 6 gesteckt werden und die Spannschenkel 3 entsprechend miteinander verbunden werden.

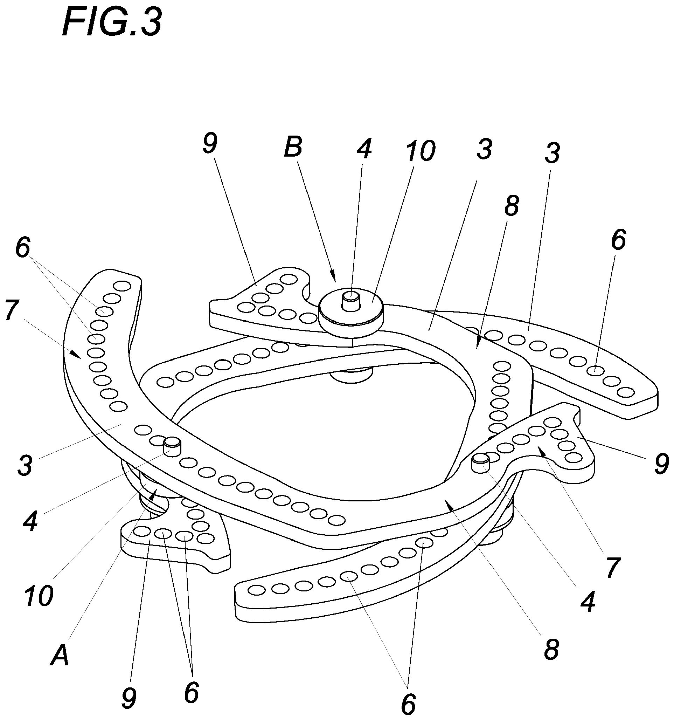

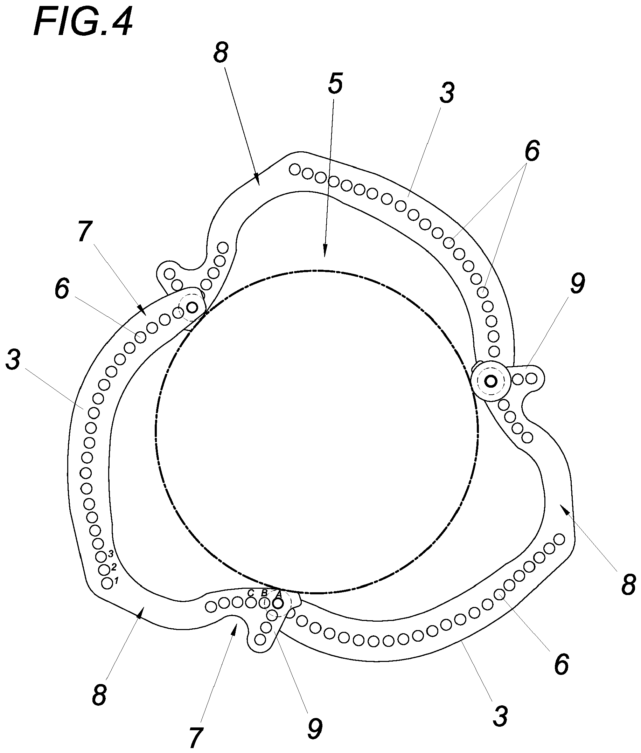

Wie beispielweise aus den Figs. 3 und 4 ersichtlich, können die Spannschenkel 3 Gleichteile ausbilden. Dies bedeutet, dass die Spannschenkel 3 ident ausgebildet sind.

Vorzugsweise sind die Spannschenkel 3 gekrümmt ausgebildet. Auf diese Weise kann eine große Variation hinsichtlich des Durchmessers des Ausdrehbereichs 5 geschaffen werden. Die Vorrichtung kann demnach für kleine Ausdrehbereiche 5 eingesetzt werden, wie dies der Fig. 3 zu entnehmen ist, aber auch für größere Ausdrehbereiche 5 (Fig. 4).

Die Spannschenkel 3 können beispielsweise 25 bis 33 Löcher 6 aufweisen.

Je Spannschenkel 3 können zwei Verstellabschnitte 7 vorgesehen sein, welche durch einen durchgängigen, also lochfreien, Stabilisierungsabschnitt 8 voneinander beabstandet sind. Auf diese Weise kann die Stabilität der Vorrichtung erhöht werden. Durch die Aufteilung in zwei Verstellabschnitte 7 kann eine übersichtlichere Zuordnung der Positionen der Löcher 6 erfolgen.

Die zwei Verstellabschnitte 7 können eine unterschiedliche Anzahl an Löchern 6 aufweisen. Ein Verstellabschnitt 7 kann 5 bis 10 Löcher 6 aufweisen. Der andere Verstellabschnitt 7 kann 20 bis 25 Löcher 6 aufweisen. Die Beabstandung zwischen benachbarten Löchern 6 unterschiedlicher Verstellabschcnitte 7 kann unterschiedlich groß ausgebildet sein.

Wie insbesondere in den Figs. 3 und 4 dargelegt, können an einem Endabschnitt der Spannschenkel 3 Schenkelfortsätze 9 vorgesehen sein. Diese Schenkelfortsätze 9 sind an der dem Ausdrehbereich 5 abgewandten Bogenseite der Spannschenkel 3 angeordnet und ragen vom Hauptteil des Spannschenkels 3 ab. Die Schenkelfortsätze 9 können ebenfalls Löcher 6 aufweisen und dienen zu einer feineren Abstufung des Verstellabschnitts 7.

Aus den Figs. 2 und 3 kann entnommen werden, dass wenigstens zwei Backeneingriffsstiften 4 wenigstens eine Distanzscheibe 10 zugeordnet ist, deren Dicke der Dicke der Spannschenkel 3 entspricht. Die Distanzscheiben 10 können je nach Position zwischen zwei über einen gemeinsamen Backeingriffsstift 4 miteinander verbundenen Spannschenkel 3 angeordnet sein (Position A, Fig. 3), oder zwischen einem Spannschenkel 3 und einer Spannbacke 1 (Position B, Fig. 2). Auf diese Weise kann ein paralleler Verlauf der Spannschenkel 3 zueinander ermöglicht und das Biegemoment nach Andrücken der Spannbacken 1 verringert werden.

Die Löcher 6 der Verstellabschnitte 7 können zahlencodiert (1,2,3...) oder buchstabencodiert (A,B,C...) sein, wie in Fig. 4 angedeutet. Die Codierung kann sich naturgemäß auf alle Löcher 6 in fortsetzender Weise ausstrecken.

## Patentansprüche

1. Vorrichtung zum spielfreien Vorspannen von Spannbacken (1) einer Drehmaschine (2) mit wenigstens drei verbindbaren Spannschenkeln (3), wobei zum umfänglichen Einschließen eines Ausdrehbereichs (5) jeweils zwei Spannschenkel über einen gemeinsamen Backeneingriffsstift (4) miteinander verbunden sind und wobei zum Ändern des Durchmessers des eingeschlossenen Ausdrehbereichs (5) die Backeneingriffsstifte (4) entlang eines in Spannschenkellängsrichtung verlaufenden Verstellabschnitts (7) der Spannschenkel (3) festlegbar sind, **dadurch gekennzeichnet, dass** der Verstellabschnitt (7) der Spannschenkel (3) von wenigstens abschnittsweise entlang der Spannschenkel (3) angeordneten Löchern (6) ausgebildet ist.

2. Vorrichtung nach Anspruch 1, **dadurch gekennzeichnet, dass** die Spannschenkel (3) Gleichteile sind.

3. Vorrichtung nach Anspruch 1 oder 2, **dadurch gekennzeichnet, dass** die Spannschenkel (3) gekrümmt ausgebildet sind.

4. Vorrichtung nach einem der Ansprüche 1 bis 3, **dadurch gekennzeichnet, dass** je Spannschenkel (3) 10 bis 50, insbesondere 20 bis 40, Löcher (6) vorgesehen sind.

5. Vorrichtung nach einem der Ansprüche 1 bis 4, **dadurch gekennzeichnet, dass** je Spannschenkel (3) zwei Verstellabschnitte (7) vorgesehen sind, welche durch einen durchgängig ausgebildeten Stabilisierungsabschnitt (8) voneinander beabstandet sind.

6. Vorrichtung nach Anspruch 5, **dadurch gekennzeichnet, dass** die zwei Verstellabschnitte (7) je Spannschenkel (3) eine unterschiedliche Anzahl an Löcher (6) aufweisen.

7. Vorrichtung nach einem der Ansprüche 1 bis 6, **dadurch gekennzeichnet, dass** an einem Endabschnitt der Spannschenkel (3) ein Schenkelfortsatz (9) vorgesehen ist, der einen von Löchern (6) ausgebildeten Verstellabschnitt (7) ausbildet, wobei der Schenkelfortsatz (9) auf der dem Ausdrehbereich (5) abgewandten Bogenseite der Spannschenkel (3) vom restlichen Spannschenkel (3) abragt.

8. Vorrichtung nach einem der Ansprüche 1 bis 7, **dadurch gekennzeichnet, dass** wenigstens zwei Backeneingriffsstiften (4) wenigstens eine Distanzscheibe (10) zugeordnet ist, deren Dicke der Dicke der Spannschenkel (3) entspricht.

9. Vorrichtung nach einem der Ansprüche 1 bis 8, **dadurch gekennzeichnet, dass** die Löcher (6) codiert sind.

## Claims

1. Device for play-free pre-tensioning of clamping jaws (1) of a lathe (5) having at least three connectable clamping limbs (3), wherein, in order to peripherally enclose a turn-out region (5), in each case two clamping limbs are connected to each other via a common jaw engagement pin (4) and wherein, in order to change the diameter of the enclosed turn-out region (5), the jaw engagement pins (4) can be fixed along an adjustment portion (7) - extending in the clamping limb longitudinal direction - of the clamping limbs (3), **characterised in that** the adjustment portion (7) of the clamping limbs (3) is formed by holes (6) disposed at least in sections along the clamping limbs (3).

2. Device as claimed in claim 1, **characterised in that** the clamping limbs (3) are identical parts.

3. Device as claimed in claim 1 or 2, **characterised in that** the clamping limbs (3) are curved.

4. Device as claimed in any one of claims 1 to 3, **characterised in that** 10 to 50, in particular 20 to 40, holes (6) are provided per clamping limb (3).

5. Device as claimed in any one of claims 1 to 4, **characterised in that** two adjustment portions (7) are provided per clamping limb (3) and are spaced apart from each other by a continuous stabilising portion (8).

6. Device as claimed in claim 5, **characterised in that** the two adjustment portions (7) comprise a different number of holes (6) per clamping limb (3).

7. Device as claimed in any one of claims 1 to 6, **characterised in that**, at an end portion of the clamping limbs (3), a limb projection (9) is provided which forms an adjustment portion (7) formed by holes (6), wherein the limb projection (9) protrudes away from the rest of the clamping limb (3) on the arcuate side - facing away from the turn-out region (5) - of the clamping limbs (3).

8. Device as claimed in any one of claims 1 to 7, **characterised in that** at least two jaw-engagement pins (4) are allocated at least one spacing disc (10), the thickness of which corresponds to the thickness of the clamping limbs (3).

9. Device as claimed in any one of claims 1 to 8, **characterised in that** the holes (6) are coded.

## Revendications

1. Dispositif de préserrage sans jeu des mâchoires de serrage (1) d'une machine tournante (2) comprenant au moins trois branches de serrage interconnectables (3), dans lequel, pour fermer de façon circonférentielle une région d'alésage (5), deux branches de serrage sont respectivement reliées l'une à l'autre par l'intermédiaire d'une broche d'engagement de mâchoire commune (4), et dans lequel, pour modifier le diamètre de la région d'alésage (5) ainsi fermée, les broches d'engagement de mâchoire (4) peuvent être fixées le long d'une section de réglage (7) des branches de serrage (3) qui s'étend dans la direction longitudinale des branches de serrage, **caractérisé en ce que** la section de réglage (7) des branches de serrage (3) est formée par des perforations (6) qui sont distribuées au moins par sections le long des branches de serrage (3).

2. Dispositif selon la revendication 1, **caractérisé en ce que** les branches de serrage (3) sont des pièces identiques.

3. Dispositif selon la revendication 1 ou 2, **caractérisé en ce que** les branches de serrage (3) sont courbes.

4. Dispositif selon l'une quelconque des revendications 1 à 3, **caractérisé en ce que** de 10 à 50, en particulier de 20 à 40 perforations (6) sont prévues par branche de serrage (3).

5. Dispositif selon l'une quelconque des revendications 1 à 4, **caractérisé en ce que** deux sections de réglage (7) sont prévues pour chaque branche de serrage (3) et sont espacées l'une de l'autre par une section de stabilisation (8) formée de façon continue.

6. Dispositif selon la revendication 5, **caractérisé en ce que** les deux sections de réglage (7) comportent un nombre différent de perforations (6) par branche de serrage (3).

7. Dispositif selon l'une quelconque des revendications 1 à 6, **caractérisé en ce qu'**un prolongement de branche (9) est prévu sur une partie d'extrémité des branches de serrage (3) et constitue une partie de réglage (7) formée par des perforations (6), dans lequel le prolongement de branche (9) dépasse du reste de la branche de serrage (3) sur le côté courbe de la branche de serrage (3) qui est opposé à la région d'alésage (5).

8. Dispositif selon l'une quelconque des revendications 1 à 7, **caractérisé en ce qu'**au moins deux broches d'engagement de mâchoire (4) sont associées à au moins une rondelle d'écartement (10) dont l'épaisseur correspond à l'épaisseur des branches de serrage (3).

9. Dispositif selon l'une quelconque des revendications 1 à 8, **caractérisé en ce que** les perforations (6) sont codées.
